# EUROPEAN PATENT APPLICATION

(11) **EP 3 315 618 A1**
(43) Date of publication of application: **02.05.2018**
(21) Application number: 16817640.2
(22) Date of filing: 03.06.2016
(51) Int. Cl.: C21D 9/00, C21D 1/10, C22C 38/00

(54) **MANUFACTURING METHOD FOR MACHINE PART**

(30) Priority: 29.06.2015 JP 2015129872
(71) Applicant: NTN Corporation, Osaka-shi, Osaka 550-0003 (JP)
(72) Inventor: SATO, Miyu, Kuwana-shi Mie 511-0867 (JP); OHKI, Chikara, Kuwana-shi Mie 511-0867 (JP)
(74) Representative: Bockhorni & Kollegen
(86) International application number: PCT/JP2016/066599
(87) International publication number: WO 2017/002531

(57) **Abstract**

Provided is a high strength steel machine part. A method for manufacturing a machine part comprises the steps of: preparing a workpiece of steel (1) to be a machine part; and subjecting the workpiece (1) to a quenching process by heating a surface portion of the workpiece (1), with shear strain applied to the surface portion, to a heating temperature of an A3 transformation point temperature or higher, and subsequently cooling the surface portion. The workpiece (1) has a carbon content of 0.2 mass% or more. In the step of subjecting the workpiece (1) to a quenching process, the heating temperature is 800°C or higher, and in the quenching process the workpiece (1) has the surface portion cooled at a rate of 35°C/second or faster for a temperature range of 850°C to 300°C.

## Description

### TECHNICAL FIELD

The present invention relates to a method for manufacturing a machine part, and more particularly to a method for manufacturing a machine part having a surface layer with a hardened layer.

### BACKGROUND ART

ECAP (Equal Channel Angular Processing) is a typical method to work a metal material to provide it with severe plastic deformation. The ECAP method is attracting attention as a severe plastic deformation method in which a material after it is worked is not changed very much in shape from that before it is worked. The ECAP method, however, does not provide a material with a large amount of deformation when the material is worked once. Accordingly, in order to develop desired fine crystal grains and plasticity, the ECAP method requires working to be done a plurality of times, and thus there is a challenge in terms of working efficiency. Furthermore, it is difficult for the ECAP method to control its working condition(s). Because of such a challenge, it is difficult to use the ECAP method as an industrial technique.

Accordingly, as a metal working method for improving mass productivity and reducing cost, a method has been proposed in which a low deformation resistance region formed by heating a workpiece made of a metal material is twisted and thus turned, and thus provided with shear deformation to have a metal structure rendered fine (for example see Japanese Patent Laying-Open No.2007-308806).

### CITATION LIST

### PATENT DOCUMENT

PTD 1: Japanese Patent Laying-Open No.2007-308806

### SUMMARY OF INVENTION

### TECHNICAL PROBLEM

In the above method, however, there is no report on a process for quenching a steel material or a condition enabling the process, or a condition allowing a steel material to have a fine crystal structure.

For example, in the automobile industry, there is a demand for reducing vehicular bodies and the like in weight for the purpose of improving fuel economy or improving running performance. One approach to handle this is to reduce weight by utilizing a material highly strengthened by rendering its crystal structure fine. Inter alia, highly strengthening a material of steel serving as a major constituent material of an automobile's vehicular body by rendering its crystal structure fine would significantly contribute to reducing the vehicular body's weight, as set forth above.

The present invention has been made to address the above issue, and contemplates a high strength steel machine part.

### SOLUTION TO PROBLEM

According to the present disclosure, a method for manufacturing a machine part comprises the steps of: preparing a workpiece of steel to be a machine part; and subjecting the workpiece to a quenching process by heating a surface portion of the workpiece, with shear strain applied to the surface portion, to a heating temperature of an A3 transformation point temperature or higher, and subsequently cooling the surface portion. The workpiece has a carbon content of 0.2 mass% or more. In the step of subjecting the workpiece to a quenching process, the heating temperature is 800°C or higher, and in the quenching process the workpiece has the surface portion cooled at a rate of 35°C/second or faster for a temperature range of 850°C to 300°C.

### ADVANTAGEOUS EFFECTS OF INVENTION

A high strength steel machine part can thus be obtained.

### BRIEF DESCRIPTION OF DRAWINGS

FIG. 1 is a flowchart of a method for manufacturing a machine part according to an embodiment.
FIG. 2 schematically shows a configuration of a processing apparatus used in a heat treatment step shown in FIG. 1.
FIG. 3 is a schematic cross section of a machine part according to the present embodiment.
FIG. 4 is a photographical image of an appearance of a sample used in an experiment.
FIG. 5 is a cross-sectional enlarged photographical image of Sample 1.
FIG. 6 is a cross-sectional enlarged photographical image of Sample 2.
FIG. 7 is a cross-sectional enlarged photographical image of Sample 3.

### DESCRIPTION OF EMBODIMENTS

Hereinafter reference will be made to the drawings to describe an embodiment of the present disclosure. In the figures, identical or corresponding components are identically denoted and will not be described redundantly.

### <Method for manufacturing a machine part>

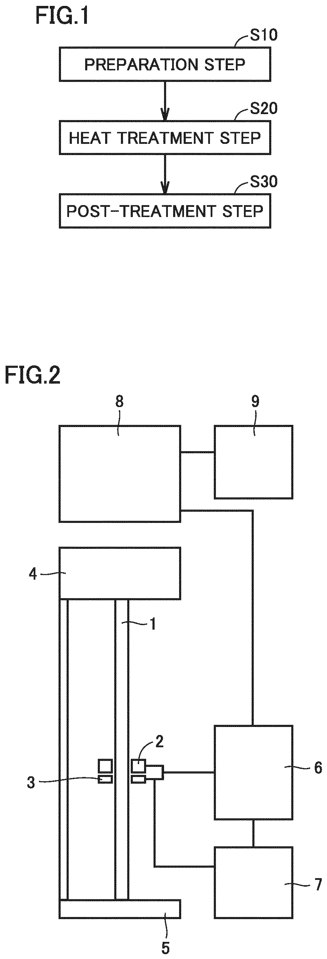

With reference to FIG. 1, a method for manufacturing a machine part according to an embodiment will be described. As shown in FIG. 1, in the method for manufacturing a machine part according to the present embodiment, a preparation step (S10) is initially performed. In this step (S10), a steel workpiece 1 to be a machine part (see FIG. 2) and a processing apparatus as shown in FIG. 2 are prepared. Workpiece 1 may be worked into a rough shape of the machine part. Workpiece 1 may have a carbon content of 0.2 mass% or more. Workpiece 1 can be worked in any conventionally well known method. Workpiece 1 may be composed of a material of any composition in sofaras it is steel, and the material for example has a carbon content of 0.2 mass% or more. Workpiece 1 may have any shape, and it may for example be a shape having a longitudinal axis extending in a prescribed direction as shown in FIG. 2 (e.g., in the form of a rod). Further, workpiece 1 can have any sectional shape in a direction perpendicular to the longitudinal axis, and it may for example be circular.

Subsequently, a heat treatment step (S20) is performed. In this step (S20), workpiece 1 has a surface portion with shear strain applied thereto and in that condition the surface portion is heated to a heating temperature of an A3 transformation point temperature or higher and subsequently cooled, and thus undergoes a quenching process. In the step (S20) as the step of performing the quenching process, the heating temperature is 800°C or higher. Furthermore in the quenching process the workpiece has the surface portion cooled at a rate of 35°C/second or faster for a temperature range of 850°C to 300°C. The quenching process with shear strain applied can provide a high strength steel machine part having a surface portion with a quench hardened layer having a fine crystal structure. The processing apparatus used in this step (S20) is configured as will be described later.

Subsequently, a post-treatment step (S30) is performed. In this step (S30), workpiece 1 having undergone the heat treatment step (S20) is ground, cleaned, etc. to provide a final machine part. Workpiece 1 can be ground, cleaned, etc. in any conventionally well known working method.

### <Configuration of Processing Apparatus>

With reference to FIG. 2, a configuration of a processing apparatus used in the heat treatment step (S20) will be described. As shown in FIG. 2, the processing apparatus includes a rotating unit 4 that holds one end portion of workpiece 1, a fixing unit 5 that fixes the other end portion of workpiece 1, a heating coil 2 for performing induction heating, a cooling nozzle 3 for performing a quenching process, an integrity panel 6, a cooling water circulating device 7, a power source 8, and a cooling water circulating device 9 for power source 8.

Rotating unit 4 is configured to be capable of rotating one end portion of workpiece 1 so as to twist one end portion of workpiece 1 relative to fixing unit 5. Rotating unit 4 includes a holding portion associated with the rotating unit and holding one end portion of workpiece 1. The holding portion associated with the rotating unit is only required to be configured to detachably hold one end portion of workpiece 1, and any conventionally well known configuration can be adopted. Further, rotating unit 4 may include, for example, a motor and a speed reducer. Rotating unit 4 may have the motor or a similar driving device connected via the speed reducer to the holding portion associated with the rotating unit. The holding portion associated with rotating unit 4 is configured to be rotatable by the driving device.

Fixing unit 5 includes a holding portion associated with the fixing unit and holding the other end portion of workpiece 1. The holding portion associated with the fixing unit is only required to be configured to detachably hold the other end portion of workpiece 1, and any conventionally well known configuration can be adopted.

Heating coil 2 is disposed so as to surround a periphery of workpiece 1 held between rotating unit 4 and fixing unit 5. Cooling nozzle 3 is disposed adjacent to heating coil 2. Cooling nozzle 3 is configured to be capable of blowing a cooling medium to workpiece 1. The cooling medium can be any medium and liquid such as water and oil can be used. Heating coil 2 and cooling nozzle 3 are movable in a direction in which workpiece 1 extends (for example, a direction from fixing unit 5 toward rotating unit 4). Heating coil 2 and cooling nozzle 3 can be moved by any conventionally well known mechanism such as a fluid cylinder and an electric motor for example.

Integrity panel 6 includes, for example, a capacitor and a transformer, and controls a heated state of workpiece 1 by controlling electric power supplied to heating coil 2. Integrity panel 6 is connected to heating coil 2 and power source 8. Power source 8 is a power source for high-frequency induction heating, for example, and includes an inverter. Power source 8 and integrity panel 6 can each have any conventionally well known configuration.

Cooling water circulating device 7 supplies heating coil 2 with water serving as a cooling medium for cooling heating coil 2. Further, cooling water circulating device 7 may supply integrity panel 6 with water serving as a cooling medium for cooling integrity panel 6. Furthermore, cooling water circulating device 7 supplies cooling nozzle 3 with cooling water to be blown through cooling nozzle 3 to workpiece 1.

Cooling water circulating device 9 supplies power source 8 with water serving as a cooling medium for cooling power source 8.

### <Operation of Processing Apparatus>

In the heat treatment step (S20) shown in FIG. 1, the above heat treatment is performed using the processing apparatus shown in FIG. 2. Specifically, workpiece 1 is fixed by rotating unit 4 and fixing unit 5. In that state, stress is applied to workpiece 1 by rotating unit 4 so as to rotate (or twist) workpiece 1 about a rotation axis extending in the direction in which workpiece 1 extends. In doing so, workpiece 1 has the other end portion fixed by fixing unit 5, and as a result, shear strain caused by the twisting is applied to an external peripheral surface of workpiece 1 (i.e., a side surface around the rotation axis).

Furthermore, in doing so, rotating unit 4 may be rotated relative to fixing unit 5 at a rate of 0.05 (revolution/second) or faster. This allows sufficient shear strain to be generated at a surface of workpiece 1. Furthermore, the amount of the shear strain applied to the surface of workpiece 1 may be 7.1 or more. Note that the amount of the shear strain is defined as follows: That is, in the heat treatment step (S20) while workpiece 1 is twisted (twisted and thus turned) about the rotation axis (the longitudinal axis of workpiece 1), workpiece 1 is heated, as will be described later, which forms a linear pattern extending on an external peripheral surface of workpiece 1 circumferentially. An angle θ formed by the direction in which the linear pattern extends and the rotation axis is measured to obtain the amount of the shear strain. And the amount of the shear strain is defined as tanθ.

Further, the amount of the shear strain can be adjusted for example by controlling the stress applied to workpiece 1 from rotating unit 4. The stress can be controlled in a conventionally well-known method such as by controlling the power of the driving device in rotating unit 4 for rotating workpiece 1 (for example, an electric motor or the like).

Workpiece 1 with shear strain thus applied thereto has a surface induction-heated by heating coil 2 disposed to surround a periphery of workpiece 1. By this induction heating, a surface of workpiece 1 is heated to a prescribed heating temperature of the A3 transformation point or higher.

Then, heating coil 2 and cooling nozzle 3 move along the surface of workpiece 1. Heating coil 2 and cooling nozzle 3 are moved in a direction from cooling nozzle 3 toward heating coil 2 (i.e., a direction in FIG. 2 from fixing unit 5 toward rotating unit 4). As a result, cooling nozzle 3 will be moved and disposed on the surface of workpiece 1 heated by heating coil 2. Then, a cooling medium such as water is blown through cooling nozzle 3 to the heated surface of workpiece 1 to quench the surface of workpiece 1. Note that heating coil 2 may be moved at a rate of 0.5 mm/second or faster. Further, cooling nozzle 3 may be moved at a rate of 0.5 mm/second or faster. Further, heating coil 2 and cooling nozzle 3 may be moved at the same rate. Further, heating coil 2 and cooling nozzle 3 may be integrated together.

Further, by moving heating coil 2 and cooling nozzle 3, as described above, heating by heating coil 2 and cooling (or the quenching process) by cooling nozzle 3 can be performed on a surface of workpiece 1 successively from the fixing unit 5 side toward the rotating unit 4 side. Furthermore, by applying a force to workpiece 1 by rotating unit 4 to twist workpiece 1, shear strain is applied to a surface of workpiece 1, and in that condition the quenching process is performed, which allows quenched workpiece 1 to have a quench hardened layer with former austenite crystal grains rendered fine.

### <Machine part>

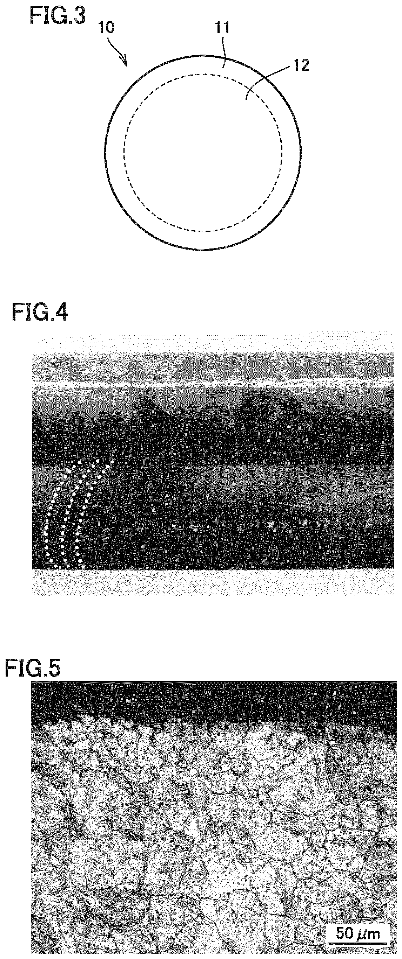

A configuration of a machine part obtained by the method for manufacturing the machine part shown in FIG. 1 will be described with reference to FIG. 3. FIG. 3 is a schematic cross section of a machine part 10 in a direction perpendicular to a longitudinal axis thereof. As shown in FIG. 3, machine part 10 includes a quench hardened layer 11 formed in a surface layer and a core portion 12 located on an inner side of quench hardened layer 11. In quench hardened layer 11, former austenite grains have a grain size number, as defined by JIS G0551, of 11 or larger. Machine part 10 is a machine part made of steel having a carbon content of 0.2 mass% or more and 0.8 mass% or less. Quench hardened layer 11 is larger in hardness than core portion 12. For example, quench hardened layer 11 may have a Vickers hardness of 500 HV or more and may have a Vickers hardness of 400 HV or more. Further, quench hardened layer 11 can have a thickness for example of 4 mm or more (if quench hardened layer 11 is defined as a region having a Vickers hardness of 400 HV or more). Note that the thickness of quench hardened layer 11 can be determined by obtaining depth of quench hardening by measuring Vickers hardness.

Although there is a part overlapping the above description, characteristic configurations of an embodiment of the present invention will be enumerated.

According to the present disclosure, a method for manufacturing a machine part comprises the steps of: preparing a workpiece of steel 1 to be a machine part (a preparation step (S10)); and subjecting workpiece 1 to a quenching process by heating a surface portion of workpiece 1, with shear strain applied to the surface portion, to a heating temperature of an A3 transformation point temperature or higher, and subsequently cooling the surface portion (a heat treatment step (S20)). Workpiece 1 has a carbon content of 0.2 mass% or more. In the step of subjecting the workpiece to a quenching process (S20), the heating temperature is 800°C or higher, and in the quenching process workpiece 1 has the surface portion cooled at a rate of 35°C/second or faster for a temperature range of 850°C to 300°C.

Thus high strength steel machine part 10 having a surface portion with quench hardened layer 11 having a fine crystal structure can be obtained.

The heating temperature is set to 800°C or higher in order to ensure that workpiece 1 has a surface portion having a temperature equal to or higher than the A3 transformation point to ensure the quenching process. The heating temperature may be 850°C or higher or may be 900°C or higher. The heating temperature's upper limit may be 1000°C.

Workpiece 1 has the surface portion cooled at a rate of 35°C/second or faster for the temperature range of 850°C to 300°C because cooling at a rate below 35°C/second may result in an insufficiently quenched portion. For the temperature range of 850°C to 300°C, the workpiece may have the surface portion cooled at a rate of 38°C/second or faster or 40°C/second or faster.

In the method for manufacturing a machine part, the step of performing a quenching process (S20) may be done such that workpiece 1 may have two portions held by first and second holding units (i.e., rotating unit 4 and fixing unit 5), respectively, and the first holding unit (rotating unit 4) is rotated relative to the second holding unit (fixing unit 5) about a rotation axis extending from the first holding unit (rotating unit 4) toward the second holding unit (fixing unit 5) to apply shear strain to a surface portion of workpiece 1.

In that case, shear strain can be applied to workpiece 1 by a relatively simple operation of holding workpiece 1 at two portions and rotating a holding unit (i.e., rotating unit 4). This can prevent the machine part manufacturing method from being complicated.

In the method for manufacturing a machine part, the first holding unit (or rotating unit 4) may be rotated (or twisted and thus turned) relative to the second holding unit (or fixing unit 5) at a rate of 0.05 (revolution/second) or faster.

This can cause sufficient shear strain in a surface portion of workpiece 1 and hence ensures that the surface portion has a crystal structure (i.e., former austenite crystal grains) rendered fine. The rotation rate is set to 0.05 (revolution/second) or faster because a rotation rate below 0.05 (revolution/second) may result in a possibility of failing to apply sufficient shear strain to the surface portion of workpiece 1. The rotation rate may be 0.07 (revolution/second) or faster or may be 0.1 (revolution/second) or faster.

In the method for manufacturing a machine part, the step of performing the quenching process (S20) may be done such that the surface portion may have a portion heated and the portion of the surface portion that is heated may be shifted. The heated portion may be shifted at a rate of 0.5 mm/second or faster. This allows the machine part manufacturing method to be done with the quenching process done sufficiently efficiently. The heated portion is shifted at a rate of 0.5 mm/second or faster because shifting the heated portion at a rate below 0.5 mm/second results in the quenching process done excessively inefficiently and may thus invite a problem in practical use. The heated portion may be shifted at a rate of 0.7 mm/second or faster or 1 mm/second or faster.

In the method for manufacturing a machine part, the step of performing the quenching process (S20) may be done with shear strain applied in an amount of 7.1 or more. This applies sufficient shear strain to the surface portion, and thus ensures that the surface portion has a fine crystal structure. Note that shear strain is applied in an amount of 7.1 or more because applying shear strain in an amount below 7.1 may result in a possibility of a quench-hardened layer with former austenite grains rendered insufficiently fine. The amount of shear strain may be 7.5 or more and may be 8 or more.

According to the present disclosure, machine part 10 is a machine part made of steel having a carbon content of 0.2 mass% or more and 0.8 mass% or less, and has a surface layer with quench hardened layer 11 and in quench hardened layer 11 former austenite grains have a grain size number of 11 or larger. In that case, quench-hardened layer 11 can have former austenite grains rendered fine and machine part 10 can be highly strengthened.

Note that the machine part has a carbon content of 0.2 mass% or more in order to allow the quenching process to more reliably form the quench-hardened layer. Furthermore, the carbon content is set to 0.8 mass% or less because doing so prevents quenching crack. The carbon content's lower limit may be 0.3 mass% or 0.35 mass%. The carbon content's upper limit may be 0.7 mass% or 0.6 mass%. Further, the former austenite grains may have a grain size number of 12 or more.

Machine part 10 may include a quench hardened layer having a thickness of 4 mm or more (when the quench hardened layer is a region having a Vickers hardness of 400 HV or larger). In that case, quench-hardened layer 11 having a sufficient thickness is formed in the surface layer of machine part 10 and thus ensures that the machine part is enhanced in strength. The quench-hardened layer may have a thickness of 4.5 mm or more or 5 mm or more.

Machine part 10 may have quench hardened layer 11 with a Vickers hardness of 500 HV or more. This ensures that the machine part is a high strength machine part. Note that quench hardened layer 11 may have a Vickers hardness of 550 HV or more and may have a Vickers hardness of 580 HV or more. The Vickers hardness of quench-hardened layer 11 means an average of measured values in Vickers hardness as measured in a cross section of machine part 10 at a plurality of locations (e.g., five points) in the direction of the depth of the quench-hardened layer.

### <Exemplary experiment>

In order to confirm an effect of the present embodiment, an experiment was conducted, as follows:

### (1) Sample

As a sample, a carbon steel shaft material with a trace amount of boron added thereto was used. Three types of samples ID1 to ID3 were prepared. The samples had a carbon content of 0.38 mass%. The samples had a cylindrical shape. The samples had a size of 500 mm in length and 20.1 mm in diameter in cross section.

### (Heat treatment)

Using the processing apparatus shown in FIG. 2, samples ID1 to ID3 were subjected to a heat treatment. Specifically, the samples were heated by high-frequency induction heating by using heating coil 2. Heating coil 2 and cooling nozzle 3 adjacent thereto were moved in the axial direction of each sample to shift a surface of the sample that is to be quenched, and thus quench the surface. Heating coil 2 and cooling nozzle 3 were moved at a rate of 0.5 mm/second.

Furthermore, the heat treatment was performed under a condition as follows: each sample's surface temperature was raised to a heating temperature equal to or higher than the A3 transformation point (i.e., to 900°C) and subsequently the sample was cooled to perform the quenching process. The sample was cooled at a rate of 37°C/second for a temperature range from 850°C to 300°C.

Regarding the twisting and thus turning of each sample during the heat treatment described above, the heat treatment was performed with the sample's condition(s) varied. Specifically, sample ID1 underwent the heat treatment without a twisting and thus turning operation. Sample ID2 underwent the heat treatment with rotating unit 4 rotated with respect to fixing unit 5 at a relative rotation rate (or twisting and thus turning rate) of 0.025 (revolution/second). Sample ID3 underwent the heat treatment with a rotation rate of 0.05 (revolution/second).

### (Measurement item)

After the heat treatment each sample's appearance was observed and in a cross section of the sample a photographical image of a surface layer (i.e., a quench-hardened layer) in cross section was obtained to observe a microstructure in that cross section. Specifically, the cross section of the sample after the heat treatment was AGS-corroded and the microstructure was observed with an optical microscope.

Sample ID3 was measured for how much amount of shear strain it had. The amount of shear strain was measured in the following method: That is, on a circumferential surface of the sample after the heat treatment, a circumferentially extending linear pattern is formed as shown in FIG. 4, as will be described hereinafter. An angle θ formed by the direction in which the linear pattern extends and the sample's longitudinal axis (or the rotation axis) was obtained by measurement. Then, tanθ was calculated as the amount of the shear strain.

Further, in the cross section, Vickers hardness was measured in a region from the surface to a depth of 200 µm. Specifically, in the cross section, Vickers hardness was measured in the region from the surface to the depth of 200 µm every 40 µm depthwise for a total of 5 locations.

### (Result)

### Result of observation of appearance:

FIG. 4 shows a photograph of an appearance of sample ID1 (shown on an upper side) subjected the heat treatment without being twisted or turned and a photograph of an appearance of sample ID3 (shown on a lower side) subjected the heat treatment while being twisted and thus turned at a rotation rate of 0.05 (revolution/second). As can be seen from FIG. 4, sample ID3 has a linear pattern extending in a direction indicated by a line of white dots (a circumferential direction along the twisting and thus turning direction).

### Amount of shear strain:

Sample ID3 had shear strain in an amount of about 7.1.

### Vickers hardness measurement:

Samples ID1 to ID3 were measured for Vickers hardness and, in a region from a surface to a depth of 200 µm, they all had Vickers hardness having an average value of 600 HV or more. In other words, any of the samples had been quench-hardened in the region from the surface to the depth of 200 µm.

### Observation of microstructure in cross section:

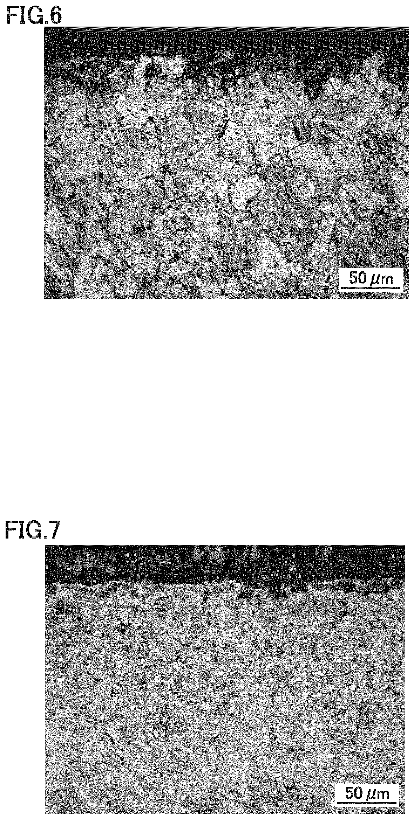

FIGS. 5 to 7 show microstructures observed with an optical microscope after Samples ID1 to ID3 had their respective cross sections AGS-corroded. FIG. 5 is a photographical image of a microstructure of sample ID1 in cross section. Sample ID1 shown in FIG. 5 had former austenite grains with a grain size number (see JIS G0551) of 9. Sample ID2 shown in FIG. 6 had former austenite grains with a grain size number of 10. Sample ID3 shown in FIG. 7 had former austenite grains with a grain size number of 12.

From these, it has been confirmed that performing the heat treatment while twisting and thus turning (that is, applying shear strain) allows a quench-hardened layer with fine crystal grains to be formed.

Note that while samples ID1 to ID3 is composed of a carbon steel with a trace amount of boron added thereto, steel having a carbon concentration of 0.2 mass% or more is effective as it allows a hardness of 500 HV or more to be obtained after quenching.

While an embodiment of the present invention has been described as above, the embodiment can be variously modified. Further, the present invention is not limited in scope to the above-described embodiment. The scope of the present invention is defined by the terms of the claims, and is intended to include any modifications within the meaning and scope equivalent to the terms of the claims.

### INDUSTRIAL APPLICABILITY

The present invention is advantageously applied to a machine part having a surface with a quench-hardened layer, in particular.

### REFERENCE SIGNS LIST

1: workpiece; 2: heating coil; 3: cooling nozzle; 4: rotating unit (motor and speed reducer); 5: fixing unit; 6: integrity panel (capacitor; transformer); 7: device circulating cooling water for cooling the integrity panel and the heating coil and cooling water supplied to the cooling nozzle; 8: high frequency induction heating power source (inverter); 9: cooling water circulating device for cooling high frequency induction heating power source; 10: machine part; 11: quench hardened layer; 12: core portion.

## Claims

1. A method for manufacturing a machine part, comprising the steps of:
preparing a workpiece of steel to be a machine part; and
subjecting the workpiece to a quenching process by heating a surface portion of the workpiece, with shear strain applied to the surface portion, to a heating temperature of an A3 transformation point temperature or higher, and subsequently cooling the surface portion,
the workpiece having a carbon content of 0.2 mass% or more,
in the step of subjecting the workpiece to a quenching process, the heating temperature being 800°C or higher, and in the quenching process, the workpiece having the surface portion cooled at a rate of 35°C/second or faster for a temperature range of 850°C to 300°C.

2. The method for manufacturing a machine part according to claim 1,
wherein the workpiece has two portions held by first and second holding units, respectively, and the first holding unit is rotated relative to the second holding unit about a rotation axis extending from the first holding unit toward the second holding unit to apply shear strain to the surface portion of the workpiece.

3. The method for manufacturing a machine part according to claim 2,
wherein the first holding unit is rotated relative to the second holding unit at a rate of 0.05 (revolution/second) or faster.

4. The method for manufacturing a machine part according to any one of claims 1 to 3, wherein
in the step of subjecting the workpiece to a quenching process the surface portion has a portion heated and the portion of the surface portion that is heated is also shifted, and
the heated portion is shifted at a rate of 0.5 mm/second or faster.

5. The method for manufacturing a machine part according to any one of claims 1 to 4, wherein in the step of subjecting the workpiece to a quenching process the shear strain is applied in an amount of 7.1 or more.
